# EUROPÄISCHE PATENTSCHRIFT

(11) **EP 2 754 197 B1**
(45) Veröffentlichungstag und Bekanntmachung des Hinweises auf die Patenterteilung: **26.08.2015**
(21) Anmeldenummer: 12753073.1
(22) Anmeldetag: 29.08.2012
(51) Int. Cl.: H01M 8/04

(54) **VERFAHREN ZUM BETREIBEN EINES BRENNSTOFFZELLENSYSTEMS**
METHOD FOR OPERATING A FUEL CELL SYSTEM
PROCÉDÉ D'EXPLOITATION D'UN SYSTÈME DE PILES À COMBUSTIBLE

(30) Priorität: 09.09.2011 DE 102011113010
(43) Veröffentlichungstag der Anmeldung: 16.07.2014
(73) Patentinhaber: Daimler AG, 70327 Stuttgart (DE)
(72) Erfinder: BLANK, Felix, 78465 Konstanz (DE); DEHN, Steffen, 89278 Nersingen (DE); JESSE, Matthias, 73265 Dettingen (DE); MAZZOTTA, Cosimo, 89073 UIm (DE); WÖHR, Martin, 73235 Weilheim (DE)
(86) Internationale Anmeldenummer: PCT/EP2012/003626
(87) Internationale Veröffentlichungsnummer: WO 2013/034260

(56) Entgegenhaltungen:
- US-A1- 2003 180 599
- US-A1- 2009 075 130

## Beschreibung

Die Erfindung betrifft ein Verfahren zum Betreiben eines Brennstoffzellensystems, nach der im Oberbegriff von Anspruch 1 näher definierten Art.

Brennstoffzellensysteme sind aus dem allgemeinen Stand der Technik bekannt. Sie nutzen beispielsweise eine Brennstoffzelle, welche als PEM-Brennstoffzelle ausgebildet sein kann, um aus Luft, Sauerstoff und Wasserstoff elektrische Energie zu erzeugen. Derartige Brennstoffzellensysteme können beispielweise in Kraftfahrzeugen zur Erzeugung von elektrischer Antriebsleistung eingesetzt werden.

Prinzipiell ist es nun so, dass eine Brennstoffzelle, welche einen mit Luft versorgten Kathodenraum und einen mit Wasserstoff oder einem wasserstoffhaltigen Gas versorgten Anodenraum aufweist, so betrieben werden kann, dass insbesondere der Anodenraum als einseitig verschlossener Anodenraum ausgebildet ist. Wenn dem Anodenraum lediglich reiner Wasserstoff zugeführt wird, dann wird dieser in der Brennstoffzelle theoretisch gänzlich umgesetzt, sodass aus dem Anodenraum keine Medien abströmen. In der Praxis ist es nun so, dass dieses Konzept nicht oder nicht zufriedenstellend funktioniert, da ein geringer Teil des in der Brennstoffzelle entstehenden Produktwassers im Bereich des Anodenraums entsteht, und da inerte Gase, wie beispielsweise Stickstoff, aus dem Kathodenraum in den Anodenraum diffundieren könne. Anstelle eines solchen einseitig verschlossenen Anodenraums, welcher auch als Dead-End bezeichnet wird, wird in der Praxis häufig ein sogenannter Near-Dead-End Anodenraum eingesetzt. Dieser weist einen Anodenausgang auf. Er wird mit einem geringfügigen Überschuss an Wasserstoff betrieben, sodass Produktwasser und inerte Gase von dem in der Brennstoffzelle nicht umgesetzten Rest an Wasserstoff aus dem Anodenraum ausgetragen werden. Dieser Aufbau ist prinzipiell sehr einfach und effizient und kann bei geeigneter Ausgestaltung, beispielsweise bei kaskadiertem Aufbau der aktiven Flächen des Anodenraums, mit sehr wenig Wasserstoffüberschuss betrieben werden. Dennoch ist auch hier ein gewisser Wasserstoffüberschuss notwendig, um Inertgase und insbesondere entstehendes Produktwasser sicher und zuverlässig auszutragen und durch das Produktwasser keine aktive Fläche zu "blockieren".

In der Praxis ist es üblich, die beschriebenen Probleme dadurch zu umgehen, dass eine Rezirkulation für Anodenabgas und den Anodenraum vorgesehen wird. Bei diesem Aufbau wird das Anodenabgas am Ausgang des Anodenraums über eine Rezirkulationsleitung zurück zum Eingang des Anodenraums geleitet und wird dort zusammen mit frisch zudosiertem Wasserstoff dem Anodenraum erneut zugeführt. Der Aufbau erlaubt die Verwendung einer vergleichsweise großen Menge an zugeführtem Wasserstoff im Verhältnis zu der im Anodenraum umgesetzten Menge an Wasserstoff und erlaubt es so, Produktwasser und Inertgase zuverlässig aus dem Anodenraum auszuspülen. Außerdem transportiert er einen Teil des - insbesondere dampfförmigen - Produktwassers zurück in den Bereich des Anodenraums und verbessert somit die Befeuchtung des Anodenraums, was bei der Verwendung einer PEM-Brennstoffzelle von Vorteil sein kann. Derartige Aufbauten sind jedoch vergleichsweise aufwändig und benötigen zum Ausgleich der Druckverluste in der Rezirkulationsleitung und in dem Anodenraum immer eine Rezirkulationsfördereinrichtung. Eine solche Rezirkulationsfördereinrichtung ist typischerweise ein Gebläse und/oder eine oder mehrere Gasstrahlpumpen, welche je nach Leistung des Brennstoffzellensystems parallel oder seriell zueinander verschaltet sind. Beispielhaft wird auf die deutsche Offenlegungsschrift DE 102 51 878 A1 verwiesen, welche ein Brennstoffzellensystem mit einer Rezirkulation für Anodenabgas und den Anodenraum beschreibt. Wie es in der genannten Anmeldung zu erkennen ist, ist bereits der einfachste Aufbau vergleichsweise komplex und benötigt entsprechenden Bauraum und eine vergleichsweise große Rezirkulationsfördereinrichtung, um den benötigten Volumenstrom im Kreislauf um den Anodenraum führen zu können.

Eine weitere Problematik einer solchen Rezirkulation für Anodenabgas besteht darin, dass sich im Laufe der Zeit Produktwasser und inerte Gase im Bereich der Rezirkulation anreichern. Dadurch sinkt aufgrund des konstanten Volumens der Rezirkulationsleitung die Konzentration an Wasserstoff und die Performance der Brennstoffzelle verschlechtert sich. Es ist daher allgemein bekannt und üblich, von Zeit zu Zeit - oder kontinuierlich über eine Blende - Wasser und inerte Gase abzulassen und diese beispielsweise der Umgebung, einer katalytischen Einheit und/oder dem Zugluftstrom zum Kathodenraum der Brennstoffzelle zuzuführen.

Ferner ist es aus dem allgemeinen Stand der Technik bekannt, dass Abgase aus dem Anodenraum, welche typischerweise Reste an Wasserstoff enthalten, in einem Brenner, vorzugsweise einem katalytischen Brenner, nachverbrannt werden können. Diese können dann über eine Turbine entspannt werden, sodass thermische Energie und Druckenergie in den Abgasen zurückgewonnen werden kann. Eine solche Turbine kann insbesondere zum Antrieb einer Luftfördereinrichtung für die Brennstoffzelle genutzt werden. Sie kann vorzugsweise mit einer elektrischen Maschine kombiniert ausgebildet sein und bildet dann einen sogenannten elektrischen Turbolader (ETC = Electric Turbo Charger). Dieser ETC ist so aufgebaut, dass die elektrische Maschine typischerweise die zusätzlich zur in der Turbine zurück gewonnenen Leistung benötigte Antriebsleistung für die Luftfördereinrichtung bereitstellt. Kommt es dazu, dass im Bereich der Turbine mehr Leistung anfällt als durch die Luftversorgungseinrichtung benötigt wird, dann kann die elektrische Maschine auch generatorisch betrieben werden, um ihrerseits elektrische Leistung zu erzeugen.

Aus der US 2009/0075130 A1 ist ein Brennstoffzellensystem bekannt, bei welchem Anoden- und Kathodenabgas rezirkuliert werden. Dabei wird die Rezirkulation für das Anoden- und das Kathodenabgas über einen einzigen gemeinsamen Motor angetrieben. Die Geschwindigkeit des Antriebsmotors kann dabei lastabhängig variiert werden, wodurch sich in Abhängigkeit der Last unterschiedliche Rezirkulationsraten bzw. Volumenströme der Rezirkulation ergeben.

Ferner ist es aus der US 2003/0180599 A1 bekannt, dass die Rezirkulation des Anodenabgases in einem Brennstoffzellensystem über eine Gasstrahlpumpe bzw. einen Ejektor erfolgen kann. Über eine angedrosselte Bypassleitung um diese Gasstrahlpumpe kann eine Variation der Durchströmung der Gasstrahlpumpe mit Wasserstoff erfolgen. Hierdurch lässt sich die Rezrkulationsrate anpassen.

Die Aufgabe der hier vorliegenden Erfindung besteht nun darin, ein Verfahren zum Betreiben eines Brennstoffzellensystems mit einer Rezirkulation für Anodenabgas um den Anodenraum anzugeben, welches einen sehr einfachen und kompakten Aufbau des Brennstoffzellensystems bei guter Funktionalität der Brennstoffzelle ermöglicht. Erfindungsgemäß wird diese Aufgabe durch das Verfahren mit den Merkmalen im kennzeichnenden Teil des Anspruchs 1 gelöst. Weitere vorteilhafte Ausgestaltungen und Weiterbildungen des erfindungsgemäßen Verfahrens sind in den hiervon abhängigen Unteransprüchen angegeben.

Das erfindungsgemäße Verfahren sieht es vor, dass unterhalb einer vorgegebenen Grenzlast der Brennstoffzelle diese mit einer Rezirkulation von Anodenabgas betrieben wird, und dass zwischen der Grenzlast und der Volllast der Brennstoffzelle diese ohne eine solche Anodenrezirkulation betrieben wird. Das erfindungsgemäße Verfahren sieht es also vor, dass lastabhängig zwischen einem Near-Dead-End Anodenraum, bei größeren Lasten bis hin zur Volllast, und einem Anodenraum mit Anodenrezirkulation bei Teillast gewechselt wird. Der entscheidende Vorteil liegt darin, dass bei Lasten unterhalb der vorgesehenen Grenzlast, typischerweise also im Teillastbereich einerseits durch den zurückgeführten Wasserdampf eine Befeuchtung des Anodenraums möglich ist und andererseits, ohne große Wasserstoffverluste in Kauf nehmen zu müssen, mit einem vergleichsweise großen Wasserstoffüberschuss gefahren werden kann, um trotz der für einen Austrag von Wasser aus dem Anodenraum ungünstigen Bedingungen im Teillastbetrieb das Wasser vollständig aus dem Anodenraum austragen zu können. Außerdem muss die benötigte Rezirkulationsfördereinrichtung, vorzugsweise eine Gasstrahlpumpe, dann lediglich auf den Teillaststrom ausgelegt sein und kann entsprechend klein, einfach und kostengünstig realisiert werden.

Bei mittleren und höheren Lasten oberhalb der vorgegebenen Grenzlast reicht dann ein vergleichsweise geringer Wasserstoffüberschuss aus, um Produktwasser sicher und zuverlässig auszutragen und die Brennstoffzelle sicher und zuverlässig auch mit kleinem Wasserstoffüberschuss, welcher nur geringe Wasserstoffverluste an die Umgebung oder einen katalytischen Nachbrenner verursacht, zu betreiben. Insgesamt entsteht dadurch eine sehr kostengünstige Lösung, welche insbesondere im Vergleich zu einem bis zur Volllast betriebenen Rezirkulationsgebläse deutliche energetische Vorteile aufweist. Ferner baut ein mit dem neuen Verfahren betriebenes Brennstoffzellensystem sehr viel kleiner, sodass eine höhere Leistungsdichte möglich wird.

Dabei ist es vorgesehen, dass die vorgegebene Grenzlast in Abhängigkeit des Brennstoffzellenstroms bei bis zu 30 Prozent des maximalen Brennstoffzellenstroms bei Volllast, vorzugsweise zwischen 5 und 20 Prozent des maximalen Brennstoffzellensystems bei Volllast vorgegeben wird. In einer besonders günstigen Weiterbildung hiervon ist es dabei vorgesehen, dass die vorgegebene Grenzlast in Abhängigkeit des Brennstoffzellenstroms zwischen 10 und 15 Prozent des maximalen Brennstoffzellenstroms bei Volllast vorgegeben wird.

Der Teillastbereich, unterhalb der vorgegebenen Grenzlast, ist also in dieser besonders günstigen Ausgestaltung der Erfindung vergleichsweise klein und liegt besonders bevorzugt in der Größenordnung zwischen 5 und 10 Prozent als oberer Grenzwert. Lediglich bei Lasten unterhalb eines solchen Werts, beispielsweise unterhalb von ca. 12 Prozent des maximalen Brennstoffzellenstroms bei Volllast, ist es dann nötig, die Rezirkulation der Anodenabgase um den Anodenraum zu betreiben. Dementsprechend einfach, klein und effizient kann eine Rezirkulationsfördereinrichtung, welche vorzugsweise als Gasstrahlpumpe ausgebildet ist, realisiert werden. In allen anderen Betriebszuständen wird der Anodenraum als Near-Dead-End Anodenraum mit minimalem Wasserstoffüberschuss betrieben, was eine ausreichend gute Performance gewährleistet und einen sehr einfachen und effizienten Aufbau des Brennstoffzellensystems mit hoher Leistungsdichte ermöglicht.

In einer besonders günstigen und vorteilhaften Ausgestaltung des erfindungsgemäßen Verfahrens ist es dabei vorgesehen, dass unterhalb der vorgegebenen Grenzlast der Anodenraum mit mehr als dem 1,5-fachen, vorzugsweise dem ca. 1,7 bis 1,8-fachen des benötigten Brennstoffs versorgt wird. Eine solche sogenannte Anodenstöchiometrie von mehr als 1,5 nutzt also einen Brennstoffüberschuss von 50 Prozent oder mehr, welcher in den Anodenraum einströmt. Damit ist in jedem Fall sichergestellt, dass 50 Prozent oder mehr des Brennstoffs den Anodenraum unverbraucht passieren, entstehendes Produktwasser und durch die Membranen hindurch diffundierende Inertgase aufnehmen und aus dem Anodenraum austragen. Dennoch ist sichergestellt, dass die komplette zur Verfügung stehende aktive Fläche des Anodenraums sicher und zuverlässig mit Wasserstoff in Berührung kommt und somit in der Gesamtheit ihrer Fläche zur Erzeugung von elektrischer Leistung ausgenutzt wird.

In einer weiteren sehr günstigen und vorteilhaften Ausgestaltung des erfindungsgemäßen Verfahrens ist es ferner vorgesehen, dass oberhalb der vorgegebenen Grenzlast der Anodenraum mit weniger als dem 1,2-fachen, vorzugsweise dem ca. 1,05-fachen, des benötigten Brennstoffs versorgt wird. Ein solcher vergleichsweise geringer Brennstoffüberschuss, also eine Anodenstöchiometrie von 1,05, gewährleistet bereits im Mittellastbereich und Volllastbereich einen ausreichenden Druckabfall im Bereich des Anodenraums, sodass Wasser und Inertgase zuverlässig ausgetragen werden. Der vergleichsweise kleine Wert von beispielsweise ca. 1,05 gewährleistet andererseits, dass nur eine geringe Menge an Wasserstoff nicht im Bereich der Brennstoffzelle umgesetzt wird und entsprechend an die Umgebung gelangt.

In einer weiteren sehr günstigen und vorteilhaften Ausgestaltung des erfindungsgemäßen Verfahrens ist es zusätzlich vorgesehen, dass das Abgas aus dem Anodenraum oder der Rezirkulation um den Anodenraum einer Verbrennung, insbesondere einer katalytischen Verbrennung, zugeführt wird, wobei die Verbrennungsabgase in einer Turbine entspannt werden. Die Abfuhr des überschüssigen Wasserstoffs, welcher aus der Rezirkulation um den Anodenraum abgelassen werden muss, und welcher insbesondere im Near-Dead-End-Betrieb den Anodenraum verlässt, kann also einer Verbrennung, insbesondere einer katalytischen Verbrennung, zugeführt werden. Insbesondere erfolgt dies so, dass das Abgas mit dem Restwasserstoff zusammen mit dem Abgas aus dem Kathodenraum, welches Restsauerstoff enthält, einer solchen Verbrennung zugeführt wird. Durch die Verbrennung werden dann einerseits Wasserstoffemissionen an die Umgebung vermieden und andererseits kann in den Abgasen verbleibende Druckenergie und bei der Verbrennung des Restwasserstoffs entstehende thermische Energie im Bereich der Turbine entsprechend genutzt werden, beispielsweise um die Luftfördereinrichtung für das Brennstoffzellensystem in ihrem Antrieb zu unterstützen.

In einer weiteren besonders günstigen und vorteilhaften Ausgestaltung ist es dabei vorgesehen, dass das Abgas aus dem Anodenraum oder der Rezirkulation um den Anodenraum zusammen mit entstandenem Produktwasser über eine Blende und/oder eine Ventileinrichtung abgeführt wird. Die Abfuhr kann also kontinuierlich oder diskontinuierlich erfolgen. Insbesondere beim Einsatz einer katalytischen Verbrennung ist die kontinuierliche Abfuhr des Abgases in jedem Fall zu bevorzugen, da dies eine gleichmäßige und zuverlässige Verbrennung sicherstellt und stark schwankende Bedingungen im Bereich der Turbine vermeidet. Dadurch wird die Rückgewinnung von Energie aus den Abgasen beziehungsweise Verbrennungsabgasen verbessert.

Weitere vorteilhafte Ausgestaltungen des erfindungsgemäßen Verfahrens ergeben sich ferner aus den restlichen abhängigen Unteransprüchen und werden anhand des Ausführungsbeispiels deutlich, welches nachfolgend unter Bezugnahme auf die Figuren näher beschrieben wird.

Dabei zeigen:
- Fig. 1: ein Brennstoffzellensystem in einer schematischen Darstellung, welches zur Durchführung des erfindungsgemäßen Verfahrens geeignet ist;
- Fig. 2: die Verfahrensführung gemäß der Erfindung ein einem ersten Lastbereich;
- Fig. 3: die Verfahrensführung gemäß der Erfindung ein einem zweiten Lastbereich; und
- Fig. 4: ein Diagramm der Anodenstöchiometrie λ über dem Brennstoffzellenstrom I.

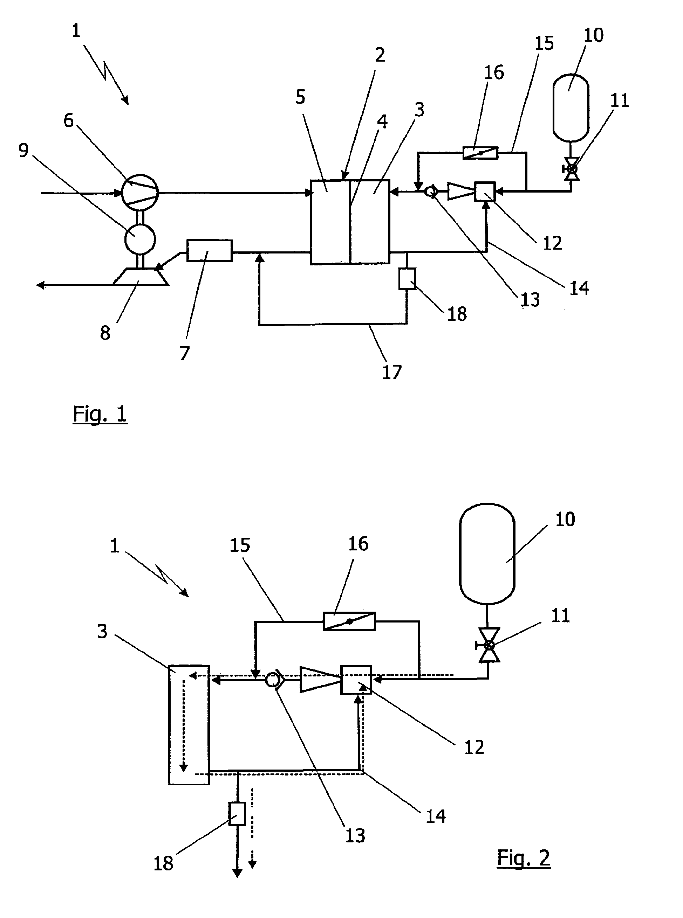

In der Darstellung der Figur 1 ist ein stark schematisiert dargestelltes Brennstoffzellensystem 1 zu erkennen. Dieses umfasst als wesentlichen Bestandteil eine Brennstoffzelle 2, welche als PEM-Brennstoffzelle ausgebildet sein soll. Diese weist einen Anodenraum 3 auf, welcher über für Protonen durchlässige Membranen 4 von einem Kathodenraum 5 der Brennstoffzelle 2 getrennt ausgebildet ist. Typischerweise ist die Brennstoffzelle 2 so aufgebaut, dass diese als Stapel von Einzelzellen, als sogenannter Brennstoffzellenstack, ausgeführt ist.

Dem Kathodenraum 5 der Brennstoffzelle 2 wird Sauerstoff als Luftlieferant über eine Luftfördereinrichtung 6 zugeführt. Die nicht verbrauchte Abluft aus dem Kathodenraum 5, welche immer noch eine gewisse Menge an Restsauerstoff enthält, strömt dann in den Bereich eines Brenners, vorzugsweise eines katalytischen Brenners 7. Hier wird sie zusammen mit Wasserstoff, welcher in später noch näher erläuterter Art und Weise aus den Abgasen des Anodenraums 3 stammt, nachverbrannt. Die heißen Abgase werden über eine Turbine 8 entspannt. Hierdurch wird zumindest ein Teil der in den Abgasen vorhandenen Druckenergie und der in den Abgasen vorhandenen thermischen Energie genutzt, um die auf derselben Welle angeordnete Luftfördereinrichtung 6 anzutreiben. In den typischen Betriebszuständen wird die im Bereich der Turbine 8 anfallende Leistung nicht zum alleinigen Antrieb der Luftfördereinrichtung 6 ausreichen. Daher weist der Aufbau aus Turbine 8 und Luftfördereinrichtung 6 typischerweise noch eine elektrische Maschine 9 auf, welche die restliche zum Antrieb der Luftfördereinrichtung 6 benötigte Leistung bereitstellt. In Situationen, in denen im Bereich der Turbine 8 mehr Leistung anfällt als von der Luftfördereinrichtung 6 benötigt wird, kann die elektrische Maschine 9 auch generatorisch betrieben werden und ihrerseits elektrische Leistung zur Verfügung stellen. Der Aufbau aus Luftfördereinrichtung 6, elektrischer Maschine 9 und Turbine 8 wird auch als elektrische Turbolader oder ETC (Electric Turbo Charger) bezeichnet.

Dem Anodenraum 3 der Brennstoffzelle 2 wird Wasserstoff aus einem Druckgasspeicher 10 über ein Druckregelventil 11 zugeführt. Dieses Druckregelventil 11 soll dabei vorzugsweise als kontinuierliches Druckregelventil, also nicht als gepulstes Taktventil, ausgebildet sein. Eine solche Ausgestaltung des Druckregelventils 11 als kontinuierliches Druckregelventil ermöglicht im Gegensatz zu einem gepulsten Taktventil deutliche Vorteile hinsichtlich der von dem Druckregelventil 11 verursachten Geräuschemissionen und Vibrationen. Nach dem Druckregelventil 11 strömt der Wasserstoff in den Bereich einer Gasstrahlpumpe 12 und von dort über ein Rückschlagventil 13 in den Anodenraum 3 der Brennstoffzelle 2. Abgas aus dem Anodenraum 3 der Brennstoffzelle 2 kann über eine Rezirkulationsleitung 14 zurück in den Bereich der Gasstrahlpumpe 12 geführt werden und kann so, zusammen mit dem frischen Wasserstoff aus dem Druckgasspeicher 10 dem Anodenraum 3 erneut zugeführt werden. Außerdem zeigt der in Figur 1 dargestellte Aufbau des Brennstoffzellensystems 1 einen Bypass 15 mit einer Ventileinrichtung 16 um die Gasstrahlpumpe 12, auf welchen später noch näher eingegangen werden wird.

Mit der Zeit reichert sich in der Rezirkulation des Abgases um den Anodenraum 3 Produktwasser, welches im Anodenraum 3 entstanden ist, und inertes Gas, welches durch die Membranen 4 im Kathodenraum 5 in den Anodenraum 3 diffundiert ist, an. Da das Volumen der Rezirkulation konstant ist, sinkt dadurch unweigerlich die Konzentration an Wasserstoff und die Performance der Brennstoffzelle 2 lässt nach. Von daher ist es notwendig, entweder diskontinuierlich, von Zeit zu Zeit oder in Abhängigkeit bestimmter Parameter des Brennstoffzellensystems 1, oder, alternativ hierzu, kontinuierlich beispielsweise über eine Blende, Gas aus dem Bereich der Rezirkulationsleitung 14 abzulassen. Hierfür ist eine Ablassleitung 17, welche auch als Purge-Leitung 17 bezeichnet wird, vorhanden. Beispielhaft ist in der Darstellung der Figur 1 ein Bauelement 18 eingezeichnet, welches beispielsweise eine Ventileinrichtung und/oder eine Blende zum diskontinuierlichen oder kontinuierlichen Ablassen des Abgases aus dem Bereich des Anodenraums 3 beziehungsweise der Rezirkulationsleitung 14 sein kann. Das Abgas wird in jedem Fall auch eine gewisse Menge an Restwasserstoff aufweisen. Es wird deshalb mit dem Abgas aus dem Kathodenraum 5 vermischt und kann in dem oben bereits beschriebenen katalytischen Brenner 7 entsprechend nachverbrannt werden. Neben dem Eintrag von thermischer Energie in die Verbrennungsabgase, welche in der Turbine 8 nutzbringend in mechanische Leistung umgesetzt werden können, hat dieses Nachverbrennen den zusätzlichen Effekt, dass Wasserstoffemissionen an die Umgebung des Brennstoffzellensystems 1 vermieden werden.

Wie bereits erwähnt, ist die Darstellung des Brennstoffzellensystems 1 sehr stark schematisiert und beschränkt sich im Wesentlichen auf die zur Erläuterung der Erfindung benötigten Teile. Selbstverständlich können allgemein bekannte und übliche Bauteile wie beispielsweise ein Befeuchter, diverse Wärmetauscher, Wasserabscheider und dergleichen in dem Brennstoffzellensystem vorhanden sein, auch wenn diese hier nicht dargestellt sind.

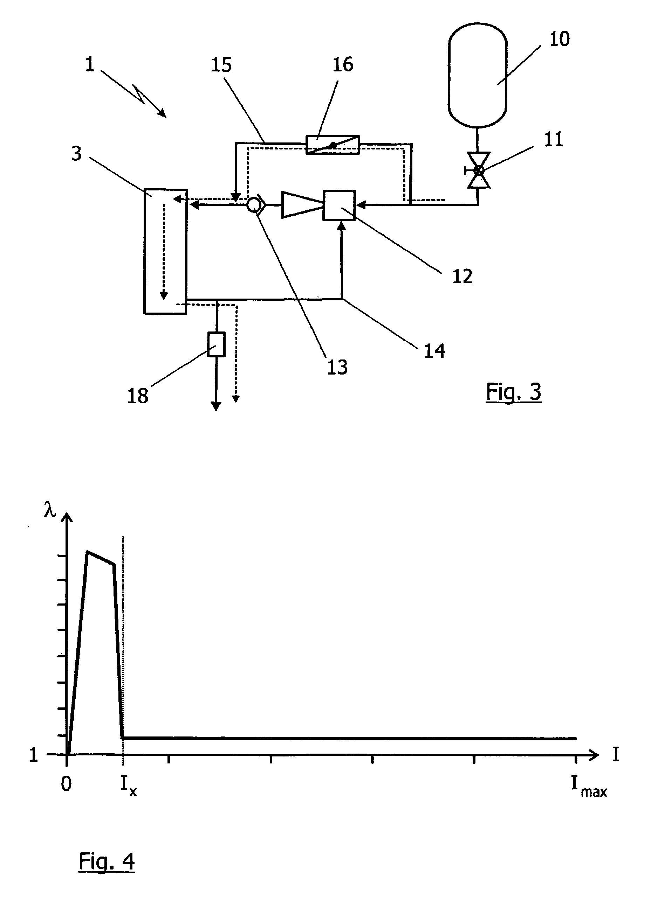

Das im Rahmen der Figur 1 beschriebene Brennstoffzellensystem erlaubt nun im Wesentlichen zwei unterschiedliche Betriebsweisen seines Anodenraums 3, welche nachfolgend anhand der Figuren 2 und 3 beschrieben werden sollen. Die Figuren 2 und 3 zeigen zur Verdeutlichung lediglich die für die Erfindung relevanten Bereiche in vergrößerter Darstellung.

In der Darstellung der Figur 2 soll der Betrieb im Teillastbereich des Brennstoffzellensystems 1 dargestellt sein. Durch die gestrichelten Pfeile ist die Strömung des Wasserstoffs und die Strömung des Abgases aus dem Anodenraum 3 der Brennstoffzelle 2 dargestellt. Unter Teillast des Brennstoffzellensystems 1 im Sinne der Erfindung soll dabei ein Lastbereich von in jedem Fall weniger als 30 Prozent, vorzugsweise ein Lastbereich zwischen 5 und 20 Prozent, besonders bevorzugt ein Lastbereich unterhalb eines Grenzwerts zwischen 10 und 15 Prozent verstanden werden. Die Grenze kann dabei insbesondere anhand des von der Brennstoffzelle 2 erzeugten Stroms I bemessen werden, welcher in der Darstellung der Figur 4 die X-Achse des Diagramms bildet. Bei einer vorgegebenen Grenzlast entsprechenden Grenzstrom Iₓ, welcher beispielsweise ca. 12 Prozent des maximalen Stroms Iₘₐₓ der Brennstoffzelle 2 beträgt, soll der Teillastbetrieb des Brennstoffzellensystems 1 vorliegen.

Bei dieser unterhalb des Grenzstroms Iₓ vorliegenden Teillastbetrieb soll der Betrieb so erfolgen, wie es in der Darstellung der Figur 2 des relevanten Ausschnitts des Brennstoffzellensystems 1 zu erkennen ist. Über das Druckregelventil 11, welches als kontinuierliches Druckregelventil ausgebildet ist, wird die vergleichsweise klein ausgelegte und damit klein und einfach aufgebaute Gasstrahlpumpe 12 von dem frischen Wasserstoff als Triebstrahl angetrieben. Der frische Wasserstoff strömt über das Rückschlagventil 13 in den Anodenraum 3 ein und wird dort zu einem gewissen Teil umgesetzt. Wie es aus der Darstellung der sogenannten Anodenstöchiometrie λ in der Darstellung der Figur 4 zu erkennen ist, wird in diesen Bereichen eine vergleichsweise hohe Anodenstöchiometrie in der Größenordnung von vorzugsweise mehr als 1,5, vorzugsweise in der Größenordnung von 1,7 bis 1,8 betrieben. Dies bedeutet also, dass das 1,7 bis 1,8-fache des im Anodenraum 3 umgesetzten Wasserstoffs dem Anodenraum 3 zugeführt wird. Damit wird der im Anodenraum 3 entstehende Teil des Produktwassers und eventuelle Inertgase, welche durch die Membran 4 in den Anodenraum 3 diffundiert sind, zusammen mit dem Überschuss des dem Anodenraum 3 zugeführten Wasserstoffs aus diesem ausgetragen und gelangt über die Rezirkulationsleitung 14 zurück in den Bereich der Gasstrahlpumpe 12. Der Volumenstrom wird von frischem zugeführtem Wasserstoff angesaugt und mit diesem zusammen wieder dem Anodenraum 3 zugeführt.

Bei längerem Betrieb des Brennstoffzellensystems 1 unter diesen Teillastbedingungen reichert sich in der Rezirkulation um den Anodenraum 3 dabei Produktwasser und inertes Gas an, wodurch die Wasserstoffkonzentration fällt. Um die Performance der Brennstoffzelle bei weiterhin erfolgendem Betrieb in Teillast aufrechterhalten zu können, muss ein Teil der Medien aus der Rezirkulation um den Anodenraum 3 entweder kontinuierlich über eine Blende oder diskontinuierlich von Zeit zu Zeit über eine Ventileinrichtung abgelassen werden. Wie bereits in der Darstellung der Figur 1 beschrieben, ist dieser Aufbau aus Blende und/oder Ventileinrichtung in den Figuren durch das mit 18 bezeichnete Bauteil dargestellt. Die Tatsache, dass hier entweder ein kleiner Teil des Volumenstroms kontinuierlich oder diskontinuierlich von Zeit zu Zeit ein Teil des Volumenstroms abgeführt wird, ist in der Figur 2 optional angedeutet.

Der Betrieb des Brennstoffzellensystems in der in Figur 2 beschriebenen Art und Weise mit geschlossener Ventileinrichtung 16 in dem Bypass 15 stellt also einen Betrieb mit Rezirkulation der Anodenabgase dar. Im Teillastbereich unterhalb des Grenzstroms Iₓ der Brennstoffzelle 2 stellt dies eine bevorzugte Betriebsweise dar, da trotz der vergleichsweise geringen Volumenströme durch die große Anodenstöchiometrie von mehr als 1,5 ein sicherer und zuverlässiger Austrag von Produktwasser aus dem Anodenraum 3 gewährleistet werden kann. Außerdem wird in dieser für die Membranen 4 vergleichsweise kritischen Betriebssituation eine Befeuchtung derselben durch zurückgeführten Wasserdampf, welcher zusammen mit dem zurückgeführten Wasserstoff dem Anodenraum 3 wieder zugeführt wird, erreicht. Die Regelung der Wasserstoffkonzentration in der Rezirkulation um den Anodenraum 3 kann durch die Blende beziehungsweise die Ventileinrichtung 18 erfolgen.

Mit steigender Last beziehungsweise steigendem Brennstoffzellenstrom I wird nun ab dem vorgegebenen Grenzstrom Iₓ auf eine alternative Betriebsweise gewechselt. Diese ist in der Darstellung der Figur 3 dargestellt, wobei auch hier die Stoffströme durch die gestrichelten Pfeile angedeutet sind. Der Unterschied besteht im Wesentlichen darin, dass die Ventileinrichtung 16 in dem Bypass 15 geöffnet wird. Der Wasserstoff aus dem Druckgasspeicher 10 strömt dann nicht mehr über die Gasstrahlpumpe 12, sondern über den Bypass 15 um die Gasstrahlpumpe 12. Über das Rückschlagventil 13 wird ein Zurückströmen des Wasserstoffs in den Bereich der Gasstrahlpumpe 12 und der Rezirkulationsleitung 14 vermieden. Gleichzeitig wird das Bauteil 18, falls es sich um eine Ventileinrichtung handelt, entsprechend geöffnet beziehungsweise strömt über das Bauteil 18, falls es sich um eine Blende handelt, das Abgas aus dem Anodenraum 3 in dieser Betriebsphase typischerweise kontinuierlich ab und gelangt, wie es aus der Darstellung der Figur 1 zu erkennen ist, in den Bereich des katalytischen Brenners 7, um hier entsprechend nachverbrannt zu werden. Die Betriebsweise bei mittleren Lasten, bei höheren Lasten und bei Volllast nutzt also den Anodenraum 3 in der Art eines Near-Dead-End Anodenraums 3 und verzichtet auf eine Rezirkulation der Anodenabgase. Die Befeuchtung, welche über die Rezirkulation erzielt werden kann, fällt dann weg, diese ist in diesen Betriebszuständen jedoch typischerweise nicht notwendig. Außerdem reicht bei den vergleichsweise hohen Druckabfällen über den Anodenraum 3 bei den entsprechend hohen Volumenströmen des Wasserstoffs ein vergleichsweise geringer Überschuss an Wasserstoff von weniger als 1,2, beispielsweise eine Anodenstöchiometrie von λ = 1,05 aus, um das Produktwasser aus dem Anodenraum 3 gänzlich auszutragen. Dies ist in dem Diagramm der Anodenstöchiometrie λ über dem Brennstoffzellenstrom I in der Darstellung der Figur 4 zu erkennen.

Da die Gasstrahlpumpe nun ausschließlich im Teillastbereich bei vergleichsweise geringen Volumenströmen des Wasserstoffs betrieben werden muss, kann diese entsprechend einfach, klein und damit leicht und kostengünstig ausgeführt werden. Auf eine zusätzliche Rezirkulationsfördereinrichtungen oder eine Parallelschaltung von mehreren Gasstrahlpumpen zur Abdeckung des gesamten Lastbereichs, welche einen sehr großen Volumenstrom rezirkulieren müssen, so wie es im Stand der Technik bei mittleren und hohen Lasten der Fall ist, kann bei dem Aufbau des hier dargestellten Brennstoffzellensystems 1 aufgrund des erfindungsgemäßen Verfahrens verzichtet werden. Damit wird Bauvolumen, Gewicht und parasitäre Leistung, beispielsweise für ein Wasserstoffrezirkulationsgebläse, eingespart.

Alles in allem entsteht so ein sehr einfacher und effizienter Aufbau. Die geringe Menge z. B. von 5 Prozent an Überschusswasserstoff kann problemlos in dem katalytischen Brenner 7 nachverbrannt und größtenteils in der Turbine 8 dann doch noch in nutzbare Leistung für das Brennstoffzellensystem 1 umgesetzt werden.

## Patentansprüche

1. Verfahren zum Betreiben eines Brennstoffzellensystems (1) mit wenigstens einer Brennstoffzelle (2), welche einen Anodenraum (3) und einen Kathodenraum (4) aufweist, wobei Anodenabgas aus dem Anodenraum (3) abströmen kann, und mit einer Rezirkulation für das Anodenabgas um den Anodenraum (3),
**dadurch gekennzeichnet, dass**
unterhalb einer vorgegebenen Grenzlast (Iₓ) der Brennstoffzelle (2) diese mit einer Rezirkulation von Anodenabgas betrieben wird, und dass zwischen der Grenzlast (Iₓ) und der Volllast (Iₘₐₓ) der Brennstoffzelle (2) diese ohne eine Rezirkulation von Anodenabgasen betrieben wird, wobei
die vorgegebene Grenzlast (Iₓ) in Abhängigkeit des Brennstoffzellenstroms (I) bei bis zu 30 Prozent des maximalen Brennstoffzellenstroms (Iₘₐₓ) bei Volllast, vorzugsweise zwischen 5 Prozent und 20 Prozent des maximalen Brennstoffzellenstroms (Iₘₐₓ) bei Volllast, vorgegeben wird.

2. Verfahren nach Anspruch 1,
**dadurch gekennzeichnet, dass**
die vorgegebene Grenzlast (Iₓ) in Abhängigkeit des Brennstoffzellenstroms (I) zwischen 10 und 15 Prozent des maximalen Brennstoffzellenstroms (Iₘₐₓ) bei Volllast vorgegeben wird.

3. Verfahren nach Anspruch 1 oder 2,
**dadurch gekennzeichnet, dass**
die Rezirkulation des Anodenabgases mittels einer Gasstrahlpumpe (12) angetrieben durch den Zustrom an frischem Brennstoff aufrechterhalten wird.

4. Verfahren nach Anspruch 3,
**dadurch gekennzeichnet, dass**
oberhalb der Grenzlast (Iₓ) der Zustrom von frischem Brennstoff durch einen Bypass (14) um die Gasstrahlpumpe (12) erfolgt.

5. Verfahren nach einem der Ansprüche 1 bis 4,
**dadurch gekennzeichnet, dass**
unterhalb der vorgegebenen Grenzlast (Iₓ) der Anodenraum (3) mit mehr als dem 1,5-fachen, vorzugsweise dem ca. 1,7 bis 1,8-fachen, des benötigten Brennstoffs versorgt wird.

6. Verfahren nach einem der Ansprüche 1 bis 5,
**dadurch gekennzeichnet, dass**
oberhalb der vorgegebenen Grenzlast (Iₓ) der Anodenraum (3) mit weniger als dem 1,2-fachen, vorzugsweise dem ca. 1,05-fachen des benötigten Brennstoffs versorgt wird.

7. Verfahren nach einem der Ansprüche 3 bis 6,
**dadurch gekennzeichnet, dass**
der Gasstrahlpumpe (12) der Zustrom an frischem Brennstoff über ein kontinuierliches Druckregelventil (11) zugeführt wird.

8. Verfahren nach einem der Ansprüche 1 bis 7,
**dadurch gekennzeichnet, dass**
das Abgas aus dem Anodenraum (3) oder der Rezirkulation um den Anodenraum (3) einer Verbrennung (7), insbesondere einer katalytischen Verbrennung, zugeführt wird, wobei die Verbrennungsabgase in einer Turbine (8) entspannt werden.

9. Verfahren nach einem der Ansprüche 1 bis 8,
**dadurch gekennzeichnet, dass**
das Abgas aus dem Anodenraum (3) oder der Rezirkulation um den Anodenraum (3) zusammen mit dem entstandenen Produktwasser über eine Blende und/oder eine Ventileinrichtung (18) abgeführt wird.

## Claims

1. Method for operating a fuel cell system (1), comprising at least one fuel cell (2) having an anode compartment (3) and a cathode compartment (4), wherein anode exhaust gas can flow out of the anode compartment (3), and further comprising a recirculation of the anode exhaust gas around the anode compartment (3),
**characterised in that**
below a preset limit load (Iₓ) of the fuel cell (2), the fuel cell (2) is operated with a recirculation of anode exhaust gas, and **in that** between the limit load (Iₓ) and the full load (Iₘₐₓ) of the fuel cell (2), the fuel cell (2) is operated without a recirculation of anode exhaust gas, wherein
the preset limit load (Iₓ) is, as a function of the fuel cell current (I) at up to 30 percent of the maximum fuel cell current (Iₘₐₓ) at full load, preferably preset to between 5 percent and 20 percent of the maximum fuel cell current (Iₘₐₓ) at full load.

2. Method according to claim 1,
**characterised in that**
the preset limit load (Iₓ) is, as a function of the fuel cell current (I), preset to between 10 percent and 15 percent of the maximum fuel cell current (Iₘₐₓ) at full load.

3. Method according to claim 1 or 2,
**characterised in that**
the recirculation of the anode exhaust gas is maintained by means of a gas jet pump (12) driven by the inflow of fresh fuel.

4. Method according to claim 3,
**characterised in that**
above the limit load (Iₓ), fresh fuel flows in through a bypass (14) around the gas jet pump (12).

5. Method according to any of claims 1 to 4,
**characterised in that**
below the preset limit load (Iₓ), the anode compartment (3) is supplied with more than 1.5 times, preferably 1.7 to 1.8 times, the required fuel.

6. Method according to any of claims 1 to 5,
**characterised in that**
above the preset limit load (Iₓ), the anode compartment (3) is supplied with less than 1.2 times, preferably approximately 1.05 times, the required fuel.

7. Method according to any of claims 3 to 6,
**characterised in that**
the gas jet pump (12) is supplied with fresh fuel via a continuous pressure control valve (11).

8. Method according to any of claims 1 to 7,
**characterised in that**
the exhaust gas from the anode compartment (3) or from the recirculation around the anode compartment (3) is fed to a combustion, in particular a catalytic combustion, wherein the combustion exhaust gases are pressure-relieved in a turbine (8).

9. Method according to any of claims 1 to 8,
**characterised in that**
the exhaust gas from the anode compartment (3) or from the recirculation around the anode compartment (3) is, together with the product water generated, discharged via an orifice and/or a valve device (18).

## Revendications

1. Procédé de fonctionnement d'un système (1) de piles à combustible doté d'au moins une pile à combustible (2), qui présente un espace d'anode (3) et un espace de cathode (4), le gaz d'échappement d'anode pouvant s'évacuer à partir de l'espace d'anode (3), et doté d'une recirculation pour le gaz d'échappement d'anode autour de l'espace d'anode (3), **caractérisé en ce qu'**en dessous d'une charge limite (Iₓ) prédéfinie de la pile à combustible (2), ladite pile à combustible fonctionne à l'aide d'une recirculation de gaz d'échappement d'anode, et **en ce qu'**entre la charge limite (Iₓ) et la pleine charge (Iₘₐₓ) de la pile à combustible (2) ladite pile à combustible fonctionne sans aucune recirculation des gaz d'échappement d'anode, la charge limite (Iₓ) prédéfinie en fonction du courant (I) de pile à combustible étant définie jusqu'à 30 pourcents du courant (Iₘₐₓ) maximum de pile à combustible en pleine charge, de préférence entre 5 et 20 pourcents du courant (Iₘₐₓ) maximum de pile à combustible en pleine charge.

2. Procédé selon la revendication 1, **caractérisé en ce que** la charge limite (Iₓ) définie en fonction du courant (I) de la pile à combustible est définie entre 10 et 15 pourcents du courant (Iₘₐₓ) maximum de pile à combustible en plein charge.

3. Procédé selon la revendication 1 ou la revendication 2, **caractérisé en ce que** la recirculation du gaz d'échappement d'anode est entraînée à l'aide d'une pompe (12) à jet de gaz et maintenue au moyen de l'approvisionnement en combustible frais.

4. Procédé selon la revendication 3, **caractérisé en ce qu'**au-dessus de la charge limite (Iₓ) l'approvisionnement en combustible frais s'effectue à l'aide d'une dérivation (14) contournant la pompe à jet de gaz (12).

5. Procédé selon l'une quelconque des revendications 1 à 4, **caractérisé en ce qu'**en-dessous de la charge limite (Iₓ) définie, l'espace d'anode (3) est alimenté 1,5 fois plus de préférence environ entre 1,7 fois et 1,8 fois plus en combustible nécessaire.

6. Procédé selon l'une quelconque des revendications 1 à 5, **caractérisé en ce qu'**au-dessus de la charge limite (Iₓ) définie, l'espace d'anode (3) est alimenté 1,2 fois moins de préférence environ 1,05 fois en combustible nécessaire.

7. Procédé selon l'une quelconque des revendications 3 à 6, **caractérisé en ce que** l'approvisionnement en combustible frais est amené à la pompe à jet de gaz (12) au moyen d'un robinet pressostatique (11) continu.

8. Procédé selon l'une quelconque des revendications 1 à 7, **caractérisé en ce que** le gaz d'échappement provenant de l'espace d'anode (3) ou la recirculation autour de l'espace d'anode (3) est amené(e) à une combustion (7), en particulier à une combustion catalytique, les gaz d'échappement de combustion se dilatant dans une turbine (8).

9. Procédé selon l'une quelconque des revendications 1 à 8, **caractérisé en ce que** Le gaz d'échappement provenant de l'espace d'anode (3) ou de la recirculation autour de l'espace d'anode (3) est conjointement évacué avec l'eau de produit ainsi formée à l'aide d'un diaphragme et/ou d'un ensemble soupape (18).
